# EUROPÄISCHE PATENTSCHRIFT

(11) **EP 0 721 477 B1**
(45) Veröffentlichungstag und Bekanntmachung des Hinweises auf die Patenterteilung: **02.06.1999**
(21) Anmeldenummer: 94924296.0
(22) Anmeldetag: 28.07.1994
(51) Int. Cl.: C08G 59/68, C08G 59/24, C08L 63/00

(54) **FLEXIBILISIERTE, LICHTINITIIERT HÄRTENDE EPOXIDHARZMASSEN, IHRE HERSTELLUNG UND VERWENDUNG**
FLEXIBILISED LIGHT-CURING EPOXY RESIN COMPOUNDS, THEIR PRODUCTION AND USE
RESINES EPOXY PHOTOPOLYMERISABLES ELASTIFIEES, LEUR PRODUCTION ET LEUR UTILISATION

(43) Veröffentlichungstag der Anmeldung: 17.07.1996
(73) Patentinhaber: DELO Industrieklebstoffe GmbH & Co. KG, 86899 Landsberg (DE)
(72) Erfinder: ECKHARDT, Gunther, D-82346 Frieding (DE); LECHNER, Günther, D-82237 Wörthsee (DE); GUGGENBERGER, Rainer, D-82211 Herrsching (DE); UHL, Gerald, D-82362 Weilheim (DE); WANEK, Erich, D-86916 Kaufering (DE)
(74) Vertreter: Bunke, Holger, Dr.rer.nat. Dipl.-Chem.
(86) Internationale Anmeldenummer: EP9402500
(87) Internationale Veröffentlichungsnummer: WO9603453

(56) Entgegenhaltungen:
- EP-A- 0 221 559
- EP-A- 0 344 910
- EP-A- 0 393 407

## Beschreibung

Die Erfindung betrifft flexibilisierte, lichtinitiiert härtende Epoxidharzmassen, ihre Herstellung und Verwendung für das Verkleben, Vergießen, Abdichten und Beschichten.

Insbesondere betrifft die Erfindung flexiblisierte Epoxidharzmassen, die eine sehr hohe Reaktivität aufweisen und auf Kunststoffen sowie Metallen eine sehr gute Haftung haben.

Die Anwendung von Epoxidharzen für das Verkleben, Vergießen, Abdichten und Beschichten ist seit langem bekannt. Epoxidharze zeichnen sich durch eine hohe Kohäsion und ein sehr gutes Adhäsionsvermögen auf einer Vielzahl von Substraten aus.

Zur Herstellung von Epoxidharzen werden im allgemeinen aromatische oder cycloaliphatische, mindestens bifunktionelle Epoxide verwendet, die zusammen mit üblichen Härterkomponenten wie Aminen, Aminoamiden, Carbonsäureanhydriden im Zuge einer Polyaddition zu meist hartelastischen bis spröden Materialien mit relativ hohem Elastizitätsmodul härten.

Auch die durch lichtinitiierte kationische Polymerisation von cycloaliphatischen oder aromatischen bzw. aliphatischen Epoxidharzen zugänglichen Polyethermassen zeichnen sich durch hohe Sprödigkeit aus. Für viele Anwendungen ist eine Flexibilisierung der Epoxidharzmassen notwendig. Bei den durch Polyaddition aushärtenden Epoxidharzmassen ist eine Flexibilisierung mit kautschukartigen Prepolymeren üblich. So wird in der US-PS 3 678 131 vorgeschlagen, den Harzmassen Umsetzungsprodukte von Carboxylgruppen-haltigen Butadien/Acrylnitril-Copolymeren mit Polyepoxiden zuzusetzen. Auch in der US-PS 3 947 522 wird vorgeschlagen, Butadien/Acrylnitril-Copolymere mit endständigen Epoxidgruppen als Flexibilisierungsmittel zu verwenden. Der Einsatz dieser Flexibilisierungsmittel in lichtinitiiert, kationisch härtenden Epoxidharzmassen führt jedoch zu einer starken Verringerung der Reaktivität dieser Massen und zu unbrauchbaren Polymerisaten.

Weiterhin ist vorgeschlagen worden, Flexibilisatoren für Epoxidharzmassen herzustellen durch Umsetzung von säuremodifizierten Polyestern oder Polyethern mit Epoxidharzen und insbesondere mit cycloaliphatischen Diepoxidharzen.

So beschreibt die japanische Patentveröffentlichung 59-030817 flexibilisierte Epoxidharze, wobei der Flexibilisator durch mehrstufige Umsetzung von Polycaprolactonen mit Dicarbonsäuren und deren anschließende Umsetzung mit cycloaliphatischen Epoxidharzen erhalten wird.

Die EP-A 0 467 258 beschreibt eine copolymerisierbare Zusammensetzung, die im wesentlichen aus mit endständigen Epoxidgruppen modifizierten Polyethern besteht sowie die Verwendung dieser copolymerisierbaren Zusammensetzung zur Plastifizierung, Elastifizierung und Flexibilisierung von Epoxidharzen. Diesen flexibilisierten, lichtinitiiert härtenden Epoxidharzmassen mit einem Flexibilisator auf der Grundlage von mit endständigen Epoxidgruppen modifizierten Polyestern oder Polyethern haftet der Nachteil an, daß sie zu einer nachträglichen Versprödung neigen. Hierbei tritt der Versprödungsprozeß oft erst nach einer längeren Lager- bzw. Gebrauchszeit ein und kann zum Versagen einer ursprünglich ausreichend flexibilisierten Epoxidharzmasse führen.

In den US-PS 4 256 828 und 4 231 951 sind photopolymerisierbare Zusammensetzungen beschrieben, die cycloaliphatische Epoxide, organische Materialien mit einer Hydroxylfunktionalität sowie photosensitive aromatische Substanzen, wie Triarylsulfonium-Komplexsalze oder Iodonium-Salze mit halogenhaltigen komplexen Anionen enthalten. Nachteilig bei der Anwendung dieser Zusammensetzungen ist der Umstand, daß eine ausreichende Flexibilität und Zähigkeit der ausgehärteten Materialien nicht sicher erreicht werden kann und daß der extrahierbare Anteil der ausgehärteten Materialien zu groß ist.

Aus EP-B1-0 119 425 sind photopolymerisierbare Beschichtungsmassen auf Basis von Epoxidharzen bekannt, die aus
a) einem cycloaliphatischen Diepoxidharz, beispielsweise 3,4-Expoxcyclohexylmethyl-3'4'-epoxycyclohexancarboxylat,
b) einem Polyol, wie beispielsweise einem Polyalkylenoxidgruppen enthaltenen Polyetherpolyol,
c) einem cycloaliphatischen Monoepoxid und einem Photoinitiator
bestehen.

Mit den dort beschriebenen Massen läßt sich zwar eine gewisse Erhöhung der Flexibilität der ausgehärteten Harze erreichen, allerdings neigen diese beschriebenen Massen bei Lagerung unter tieferen Temperaturen wie beispielsweise 0 bis 10°C zum Ausfallen von Bestandteilen der Zusammensetzung, was mit großen Verarbeitungsproblemen verbunden ist.

Außerdem entstehen bei der Aushärtung dieser Zubereitungen in dünnen Schichten bzw. in Randbereichen von Verklebungen deutliche Kräuselungseffekte der Oberfläche, was neben einer Minderung des optischen Eindrucks der Verklebung bzw. Beschichtung mit einer deutlichen Verringerung der Haftfestigkeit sowie mit Veränderungen des optischen Verhaltens (Lichtbrechung, Farbveränderungen) verbunden ist.

Die EP-A-221 559 beschreibt photopolymerisierbare Zusammensetzungen, enthaltend cycloaliphatische Epoxide, ein von Alkylenoxiden abgeleitetes Polyol mit einer Molmasse im Bereich von 2000 bis 4500 und einem Photoinitiator. Die Anwendung der beschriebenen Massen erfolgt im Bereich des Beschichtens von Holz, Papier, Metall und Plastikmassen in sehr dünnen Schichten. Für Anwendungen des Verklebens und Vergießens zeigen diese Zusammensetzungen eine zu geringe und inhomogene Reaktivität, verbunden mit einem hohen Anteil an extrahierbaren Bestandteilen in den ausgehärteten Massen.

Der Erfindung liegt die Aufgabe zugrunde, flexibilisierte, lichtinitiiert härtende Epoxidharzmassen bereitzustellen, die sich durch eine gute Lagerbeständigkeit auch bei Temperaturen von 0 bis 10°C auszeichnen, unter dem Einfluß von sichtbarem Licht zu dauerhaft flexiblen Massen aushärten, einen geringen Anteil von flüchtigen und/oder extrahierbaren Bestandteilen aufweisen und nicht zu gekräuselten Oberflächen der ausgehärteten Massen führen.

Diese Aufgabe wird erfindungsgemäß gelöst durch flexibilisierte, lichtinitiiert härtende Epoxidharzmassen, bestehend aus
(A) - 20 bis 95 Gew.-% eines Gemisches aus cycloaliphatischen und aliphatischen, jeweils mindestens eine Epoxygruppe enthaltenden Verbindungen,
(B) - 4,89 bis 73 Gew.-% mindestens einer die ausgehärtete Epoxidharzmasse flexibilisierenden Verbindung der allgemeinen Formel I 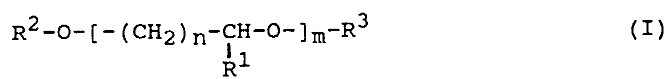 worin
   m = eine ganze Zahl von 20 bis 300,
   n = eine ganze Zahl von 1 bis 5,
   R¹ = H oder C₁ - C₄ - Alkyl,
   R² und R³, unabhängig voneinander, = H, Alkyl, Aryl, Allyl, 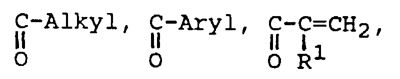 R⁴-OH, R⁴-O-Alkyl, R⁴-O-Aryl, R⁴-O-Allyl, 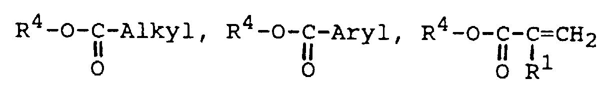 und
   R4 = einen zweiwertigen, organischen, ggf. substituierten Rest, nämlich Alkylen, Arylen oder Alkarylen,
   bedeuten,
(C) - 0,1 bis 2 Gew.-% eines Ferroceniumhexafluoroantimonates als Photoinitiator,
(D) - 0,01 bis 5 Gew.-% eines Beschleunigers,
(E) - sowie 0 bis 40 Gew.-% von Hilfsstoffen, Modifikatoren, (meth)acrylgruppenhaltigen Monomeren, (meth)acrylgruppenhaltigen Prepolymeren und/oder von unter Radikalbildung zerfallenden Verbindungen.

Die erfindungsgemäßen Epoxidharzmassen lassen sich unter der Einwirkung sichtbaren Lichtes überraschenderweise zu dauerhaft flexiblen Massen aushärten, sie besitzen einen geringen Anteil an flüchtigen und/oder extrahierbaren Bestandteilen, sie härten unter Beibehaltung glatter Oberflächen, ohne Kräuselung, aus und sie zeichnen sich durch eine gute Lagerbeständigkeit auch bei niedrigen Temperaturen im Bereich zwischen 0 und 10°C aus. Ohne sich an eine bestimmte Theorie binden zu wollen, wird angenommen, daß die vorteilhafte Flexibilisierung der erfindungsgemäßen Massen im ausgehärteten Zustand im wesentlichen darauf zurückzuführen ist, daß die als Flexibilisatoren eingesetzten Verbindungen der Komponente (B) keine endständigen Epoxidgruppen aufweisen, aber auch auf der Auswahl von Ferroceniumhexafluoroantimonaten als Photoinitiatoren sowie auf dem Verhältnis der Anteile von Photoinitiator und Beschleuniger, jeweils in bezug auf die Gesamtmenge der Epoxidharzmasse, beruht. Sowohl die stoffliche Auswahl der einzelnen Komponenten als auch die Anteilsverhältnisse zwischen den Komponenten innerhalb der Gesamtmasse sind gemeinsam für den erfindungsgemäß erzielten Erfolg, d.h. für den Kompromiß der genannten Eigenschaften, verantwortlich.

Vorzugsweise ist die Komponente (A) ein Gemisch aus cycloaliphatischen Diepoxidverbindungen und aliphatischen Mono- oder Diglycidylverbindungen sowie cycloaliphatischen Silanen oder ein Gemisch aus cycloaliphatischen Diepoxidverbindungen und aliphatischen Epoxysilanen.

Die als Flexibilisierungsmittel dienende Komponente (B) kann aus einer oder mehreren Verbindungen der im Patentanspruch 1 angegebenen allgemeinen Formel I bestehen. Bei mehreren unterschiedlichen Flexibilisatoren können sich diese sowohl hinsichtlich ihrer Zusammensetzung als auch hinsichtlich ihrer Molmasse unterscheiden.

Die fakultative Komponente (E) kann beispielsweise aus Pigmenten, Füllstoffen, das Fließverhalten der Massen beeinflussenden Mitteln wie z.B. Thixotropiermitteln und sonstigen in der Klebstofftechnik üblichen Hilfsstoffen bzw. Modifikatoren bestehen.

Die cycloaliphatischen Epoxidverbindungen der Komponente (A) werden vorzugsweise ausgewählt aus der Gruppe (1) der Diepoxide cycloaliphatischer Ester der allgemeinen Struktur 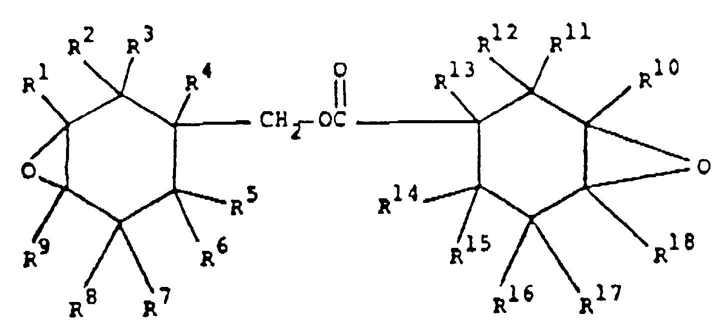 wobei die Substituenten R¹ bis R¹⁸ gleich oder verschieden sein können und unabhängig voneinander H, Alkyl oder Aryl bedeuten, (2) der Produkte der Umsetzung von epoxidierten Cyclohexanderivaten des Alkohol- oder Säuretyps mit aliphatischen Dicarbonsäuren oder Diolen sowie (3) der cycloaliphatisch substituierten epoxidierten Dioxyspiroalkane.

Besonders bevorzugt eingesetzte cycloaliphatische Diepoxidverbindungen sind 3,4-Epoxycyclohexylmethyl-3',4'-epoxycyclohexancarboxylat und 3-(3',4'-Epoxycyclohexyl)-8,9-epoxy-2,4-dioxyspiro(5.5)-undecan. Diese und andere erfindungsgemäß einsetzbare cycloaliphatische Diepoxide sind beispielsweise in der EP-B-0 119 425 beschrieben, auf die hiermit vollinhaltlich Bezug genommen wird.

Die erfindungsgemäß einzusetzenden aliphatischen Mono- und Diglycidylverbindungen stellen beispielsweise Mono- oder Diglycidether von aliphatischen Alkoholen wie beispielsweise 2-Ethylhexanol, Butandiol-1,4; Hexandiol-1,6; Octandiol-1,8 und/oder Gemischen höherer Fettalkohole dar. Weiterhin werden Mono- oder Diglycidether von Polyetherolen verwendet. Die Anwendung von Mono- und Diglycidylethern von Polyesterolen ist ebenfalls möglich.

Bevorzugt enthalten die erfindungsgemäßen Massen Alkoxysilane mit Epoxid-Endgruppen. Hierbei werden erfindungsgemäß Glycidylgruppen-haltige Silane oder Cyclohexanoxidgruppenhaltige Silane eingesetzt. Typische Vertreter dieser Silane sind Gamma-Glycidyloxypropyltriethoxysilan und 3,4-Epoxycyclohexylethyltrimethoxysilan. Diese Silane können in einer vollständig oder partiell hydrolysierten Form verwendet werden.

Bei einer bevorzugten Ausführungsform der Erfindung werden cycloaliphatische Silane in einem Massenverhältnis von 1 : 5 bis 1 : 100 und besonders bevorzugt von 1 : 20 bis 1 : 80, bezogen auf die cycloaliphatischen Diepoxidharze, eingesetzt.

Besonders bevorzugt sind als difunktionelles Epoxidharz das 3,4-Epoxycyclohexylmethyl-3',4'-epoxycyclohexylcarboxylat und als Epoxysilan das Epoxycyclohexylethyltrimethoxysilan. Als Verdünnungsmittel werden bevorzugt Mono- und Diglycidether von Polyetherdiolen eingesetzt. Solche Verbindungen sind beispielsweise die Diglycidether von Polytetrahydrofuran mit einer Molmasse von 200 - 1000.

Die erfindungsgemäß als Flexibilisierungsmittel eingesetzte Komponente (B) weist Molmassen von 4500 bis 20000 und eine Polyethergrundstruktur auf, wobei gemischte Polyether bevorzugt sind. Mit besonderem Vorteil werden Mischpolyether aus Ethylenoxid und Tetrahydrofuran eingesetzt, wobei das molare Verhältnis dieser beiden Monomeren 1 : 6 bis 1 : 2 betragen soll. Für die Einstellung des Eigenschaftsbildes kann es zweckmäßig sein, Polyether unterschiedlicher mittlerer Molmasse für die Flexibilisierung einzusetzen; auf diese Weise können beispielsweise Grad der Flexibilisierung, Reaktivität, Viskosität und Anfließverhalten eingestellt werden.

Zur Veränderung des Eigenschaftsbildes der die Komponente (B) bildenden Verbindungen kann eine Umsetzung der OH-Gruppen der Polyetherole vorgenommen werden. Hierfür sind die dem Fachmann bekannten Möglichkeiten der Umsetzung primärer Alkohole mit Säuren, Säureanhydriden, Säurehalogeniden oder mit Veretherungsmitteln geeignet. Eine Umsetzung mit isocyanathaltigen Verbindungen ist ebenfalls möglich. Bei bevorzugten Ausführungsformen der Erfindung werden die endständigen OH-Gruppen der Polyole vollständig oder teilweise methacryliert und/oder acryliert und/oder acetyliert. Weitere bevorzugte Modifizierungsarten der Polyether sind die Veretherung mit Allylchlorid oder mit langkettigen Alkanolen oder Alkanolhalogeniden.

Die als Photoinitiator (Komponente C) erfindungsgemäß eingesetzten Ferroceniumhexafluoroantimonate werden in Konzentrationen von 0,1 bis 2 Gew.-% und bevorzugt 0,4 bis 1,0 Gew.-% der Epoxidharzmasse verwendet. Ganz besonders bevorzugt ist das (n⁵-2,4-Cyclopentadien-1-yl)-[(1,2,3,4,5,6,η)-(1-methylethyl)-benzol]-eisen(1+)hexafluoroantimonat(1-), das aus dem Handelsprodukt Irgacure® 261 (Fa. Ciba Geigy) hergestellt werden kann.

Als Beschleuniger (Komponente D) können Peroxyverbindungen vom Typ der Perester, der Diacylperoxide, der Peroxydicarbonate und der Hydroperoxide eingesetzt werden. Bevorzugt werden Hydroperoxide verwendet. Als besonders bevorzugter Beschleuniger kommt Cumolhydroperoxid in etwa 70 - 90-%iger Lösung in Cumol zum Einsatz.

Das Massenverhältnis zwischen Ferroceniumhexafluoroantimonat und Cumolhydroperoxid kann in weiten Grenzen variiert werden, vorzugsweise wird jedoch ein Vehältnis von 1 : 1 bis 1 : 6 und besonders bevorzugt von 1 : 2 bis 1 : 4 verwendet.

Die erfindungsgemäßen Massen können ggf. zusätzlich 5 bis 25 Gew.-% von Acrylgruppen-haltigen oder Methacrylgruppen-haltigen Monomeren und/oder Prepolymeren enthalten, wobei diese Verbindungen jeweils mindestens 2 Acryl- und/oder Methacrylgruppen sowie mindestens eine Ethergruppierung im Molekül besitzen. Beispiele für diese Verbindungsklassen sind die methacrylierten oder acrylierten Umsetzungsprodukte von Alkoxy-verlängerten Alkoholen wie beispielsweise Trimethylolpropan oder Pentaerythrol.

Die Herstellung der erfindungsgemäßen Epoxidharzmassen kann in dem Fachmann an sich bekannter Weise erfolgen. Das erfindungsgemäße Verfahren zur Herstellung der erfindungsgemäßen Epoxidharzmassen ist dagegen ein zweistufiges Verfahren, bei dem in der ersten Stufe unter Einleitung bzw. unter Einmischung von Luft eine homogene Vormischung aller Bestandteile, mit Ausnahme des Photoinitiators, d.h. der Komponente (C), aber einschließlich als Komponente (E) gegebenenfalls zugesetzter Pigmente, Füllstoffe oder Thixotropiermittel, erfolgt und diese Homogenisierung in Gegenwart von Licht vorgenommen wird und bei dem in einer zweiten Stufe unter Ausschluß von Licht die Zugabe des Ferroceniumhexafluoroantimonates in einem geeigneten Lösemittel, vorzugsweise in Propylencarbonat, zur homogenisierten Vormischung und nach vollständiger Einmischung dieser Komponente (C) die Abfüllung der so erhaltenen verarbeitungsfähigen erfindungsgemäßen Epoxidharzmasse in lichtundurchlässige Behälter erfolgt.

Die erfindungsgemäßen flexibilisierten, lichtinitiiert härtenden Epoxidharzmassen werden vorzugsweise zum Verkleben, Vergießen, Abdichten und Beschichten von Substraten verwendet. Die Massen eignen sich besonders zum Verkleben von Metallen und elektronischen Bauteilen, zum Bestücken von Leiterplatten sowie als Gießharze in der Elektrotechnik und zum Vergießen elektronischer Bauelemente.

Die Erfindung wird nachfolgend anhand der folgenden Beispiele und Vergleichsbeispiele weiter erläutert:

### Beipiele 1 - 9

In einer Glasapparatur mit einem Volumen von 80 1, ausgerüstet mit Zulauf, Feststoffeintrag, Be- und Entlüftung, Bodenabgang und einem Rührwerk, das als Dissolverscheibe ausgebildet ist, wird unter Raumlicht die cycloaliphatische Epoxidverbindung der Komponente (A) vorgelegt, unter ständigem Rühren die flüssigen Komponenten der Masse zugegeben und anschließend die Feststoffe portionsweise eingebracht (Komponenten B, D und ggf. E). Die Homogenisierung der Mischung erfolgt durch 30-minütiges Rühren mit einer Umfangsgeschwindigkeit der Dissolverscheibe von 18 m/s. Die so erhaltene luftblasenhaltige Masse wird in völliger Dunkelheit mit der Lösung des Ferroceniumhexafluoroantimonates in Propylencarbonat (50 %-ig) (Komponente C) versetzt und die Mischung durch Rühren, bei einem Druck von 150 mbar und einer Umfangsgeschwindigkeit von 1 m/s eine Stunde lang nach-homogenisiert. Die Abfüllung erfolgt unter vollständigem Lichtausschluß in lichtundurchlässige Behälter.

Die Zusammenstellung der Zusammensetzung der erfindungsgemäßen Zubereitungen ist in Tabelle 1 enthalten.

Eine Aufstellung der erreichten Eigenschaften enthält Tabelle 2, die Bestimmungsmethoden dieser Eigenschaften sind nachfolgend beschrieben.

### Ausprüfung der Massen

Für die Ausprüfung der Massen wurden folgende Methoden herangezogen:
1. Druckscherfestigkeit
   Es wurden Glasprüfkörper der Abmessungen 20 x 20 x 4 mm verwendet. Die Masse wurde in einer Schicht von etwa 100 µm aufgetragen, die beiden Glaskörper gefügt und die Verbindung mittels der Lampe Delolux 03 (Fa. Delo Industrieklebstoffe, München-Gräfelfing) eine Minute je Vorder- und Rückseite belichtet und dabei gleichzeitig ausgehärtet. Nach der Belichtung wurde die Verbindung 72 Stunden bei Raumtemperatur gelagert. Die Prüfung der Druckscherfestigkeit erfolgte mit einem Zwick Universal-Prüfgerät bei einer Deformationsgeschwindigkeit von 10 mm/Min.
2. Zugfestigkeit
   An Zugfestigkeitsprüfkörpern der Abmessung 25 x 6 x 2 mm (Schulterstäbchenmeßstrecke: 10 x 2 x 2 mm) wurde die Zugfestigkeit und die Reißdehnung mittels der Zwick-Universal-Prüfmaschine mit einer Deformationsgeschwindigkeit von 10 mm/Min. bestimmt. Die Herstellung der Prüfkörper erfolgte durch Belichtung der in Formen eingegossenen Massen unter der Lampe Delolux 03 (je eine Minute Vorder- und Rückseite) und darauffolgende Lagerung bei Raumtemperatur (72 Stunden).
3. Reißdehnung nach thermischer Nachhärtung
   Zur Bestimmung des Effektes der thermischen Nachhärtung wurden die Zugfestigkeitsprüfkörper nach Belichtung und 72-stündiger Lagerung bei Raumtemperatur eine Stunde bei 120° im Umlufttrockenschrank nachgehärtet. Danach wurde, wie unter 2. beschrieben, die Reißdehnung bestimmt.
4. Wasserextrakt
   Herstellung der Prüfkörper für die Extraktion
   Die Massen wurden in Teflonringe mit einem Durchmesser von 15 mm und einer Höhe von 1,5 mm eingebracht und beidseitig mit Polycarbonatfolien bedeckt. Die lichtinduzierte Aushärtung erfolgte mittels einer Lampe Delolux 03. Diese Lampe hat einen Emissionsbereich von 315 -600 nm. Es wurde ein Lampenabstand von 100 mm eingestellt. Die gemessene Intensität im UV-A-Bereich betrug 45 mW/cm². Die Vorder- und Rückseiten der Probekörper wurden je 1 Minute unter den vorgenannten Bedingungen bestrahlt. Die Extraktionsuntersuchungen begannen 72 Stunden nach der Bestrahlung der Probekörper, die zwischenzeitlich bei Raumtemperatur gelagert wurden.
   In einer modifizierten Soxhlet- Apparatur wurde bei Siedetemperatur die Extraktion von Prüfkörpern vorgenommen. Die Prüfkörper wurden nach einer Extraktionszeit von 100 Stunden bei Raumtemperatur entnommen und anschließend im Hochvakuum einen Tag lang getrocknet und gewogen. Der prozentuale Massenverlust nach dieser Behandlung ist in den Tabellen 2 und 4 angegeben.
   In analoger Weise erfolgte die Bestimmung des Acetonextraktes bei Siedetemperatur des Acetons.
5. Kräuselung der Oberfläche:
   Die visuelle Beurteilung der Oberfläche erfolgte nach Auftragung einer dünnen Schicht (100 ± 20 µm) auf einen Glaskörper und Aushärtung dieser Schicht (1 min, 100 mm Lampenabstand) unter der Delolux 03.
6. Ausfällung bei Lagerung:
   Zur Beurteilung der Lagerfähigkeit wurden die Massen in Glasgefäße gefüllt, mit einem lichtundurchlässigen Behälter umgeben und 6 Wochen bei 4°C eingelagert. Nach dieser Zeit wurde der Inhalt des Glasgefäßes im Dunkelraum betrachtet.

### Vergleichsbeispiele 1 - 7

Tabelle 3 enthält die Zusammensetzungen der Massen entsprechend den Vergleichsbeispielen 1 bis 7. In Tabelle 4 sind die Ergebnisse der Ausprüfung der Massen gemäß Tabelle 3 (Vergleichsbeispiele) dargestellt.

Die Überlegenheit der erfindungsgemäßen Massen gemäß den Beispielen 1 - 9 gegenüber den Massen der Vergleichsbeispiele 1 - 7 geht eindeutig aus dem Vergleich der Ergebnisse der Ausprüfung entsprechend den Tabellen 2 und 4 hervor. So zeigen die ausgehärteten Vergleichs-Massen meist geringere Festigkeitswerte, sehr hohe Extraktionswerte, eine starke thermische Nachhärtung, die sich durch einen Abfall der Reißdehnung ausdrückt, eine deutliche bis starke Kräuselung der Oberfläche und in einigen Fällen eine Ausfällung bei Lagerung.

Bei Massen mit geringer Zugfestigkeit (< 5 N/mm²) tritt durch die thermische Nachhärtung eine Erhöhung der Zugfestigkeit und damit ein scheinbarer Anstieg der Reißdehnung ein.

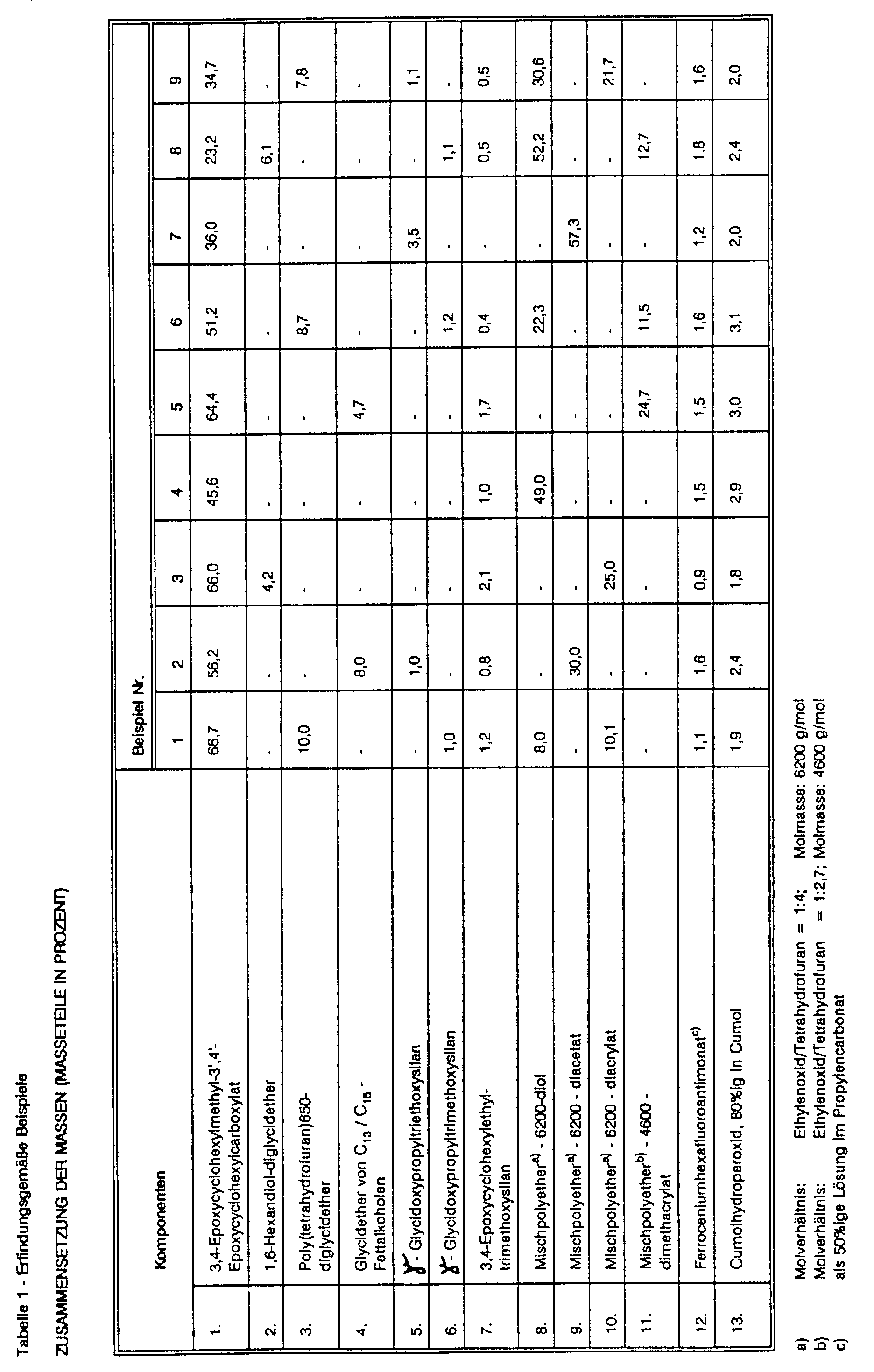

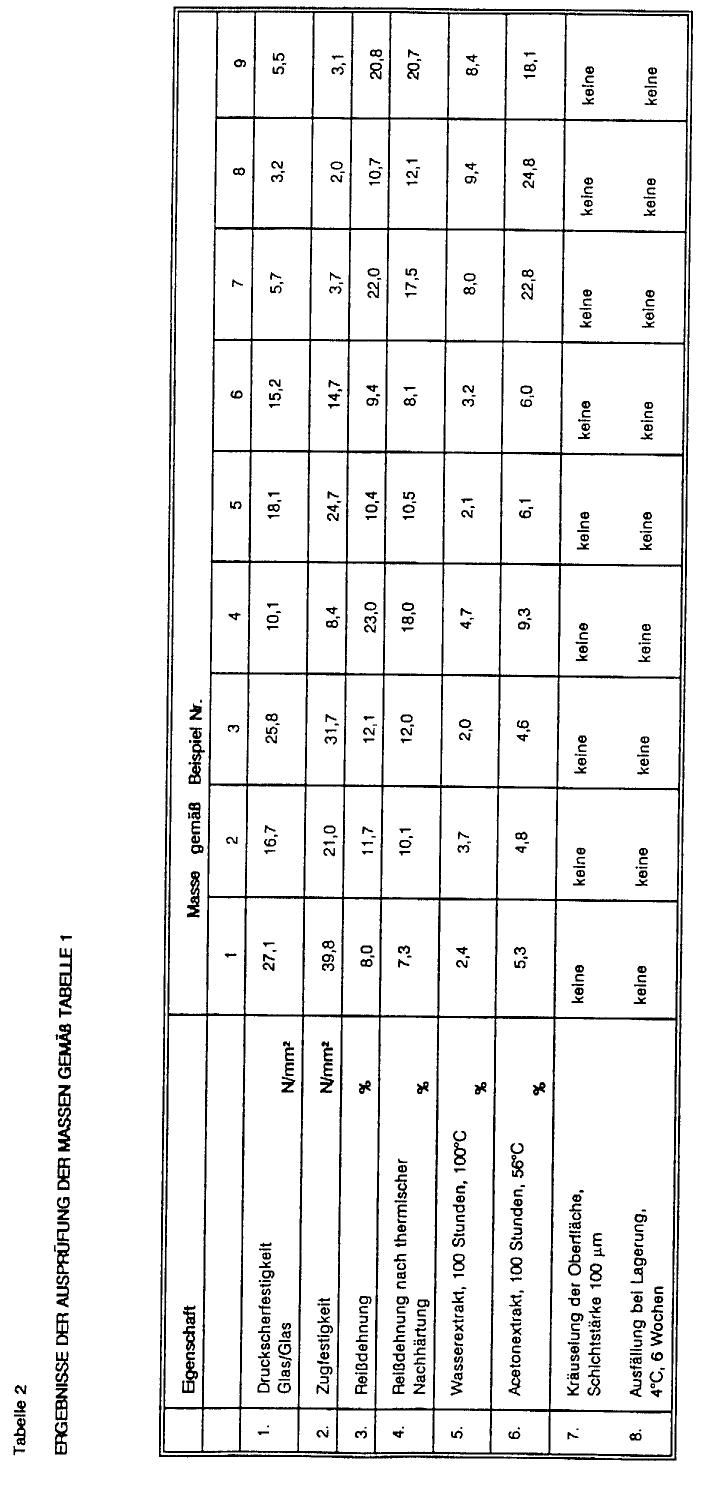

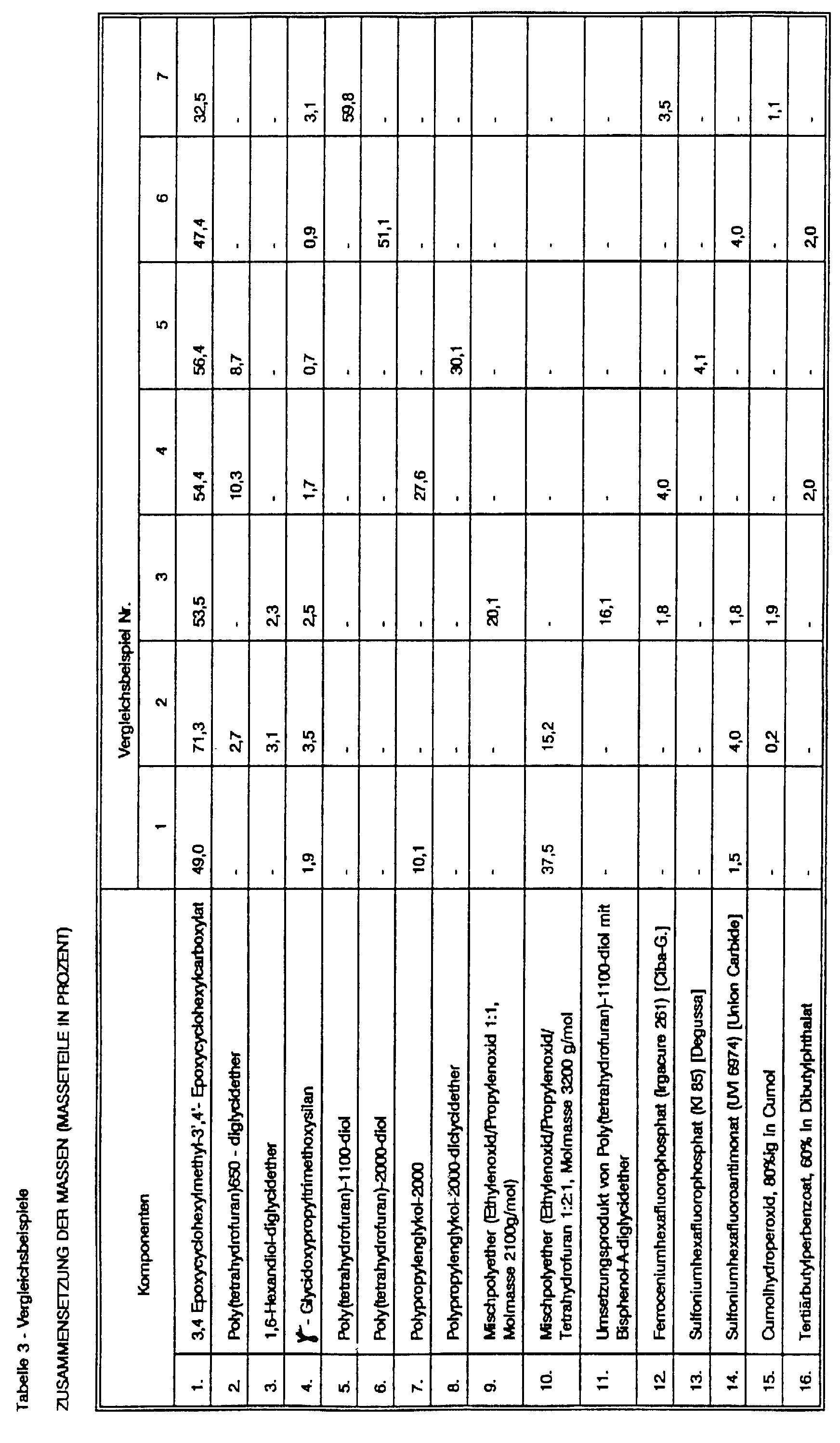

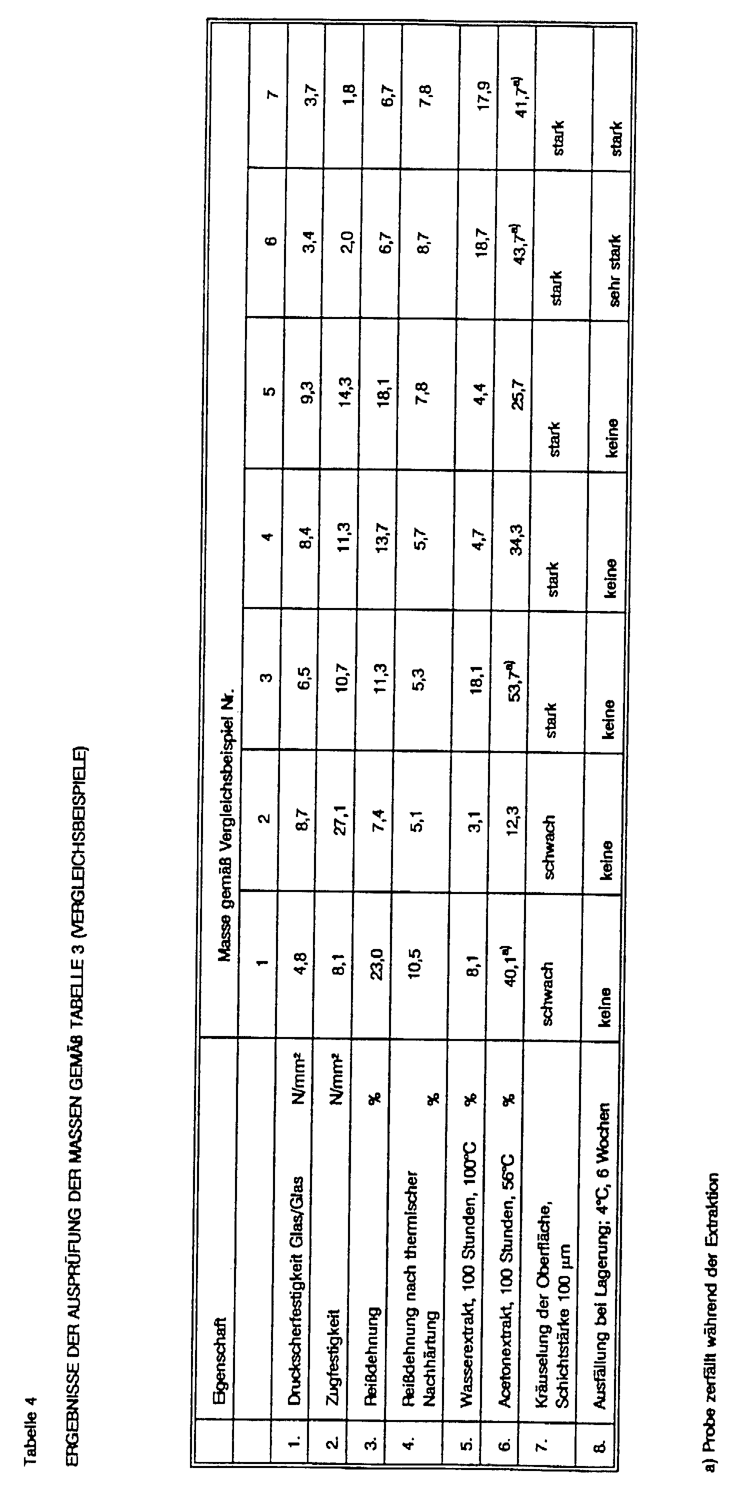

## Patentansprüche

1. Flexibilisierte, lichtinitiiert härtende Epoxidharzmasse, bestehend aus
(A) - 20 bis 95 Gew.-% eines Gemisches aus cycloaliphatischen und aliphatischen, jeweils mindestens eine Epoxygruppe enthaltenden Verbindungen,
(B) - 4,89 bis 73 Gew.-% mindestens einer die ausgehärtete Epoxidharzmasse flexibilisierenden Verbindung der allgemeinen Formel I 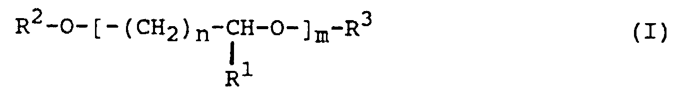 worin
m = eine ganze Zahl von 20 bis 300,
n = eine ganze Zahl von 1 bis 5,
R¹ = H oder C₁-C₄-Alkyl,
R² und R³, unabhängig voneinander, = H, Alkyl, Aryl, Allyl, 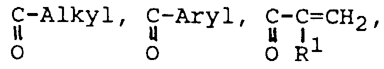 R⁴-OH, R⁴-O-Alkyl, R⁴-O-Aryl, R⁴-O-Allyl, 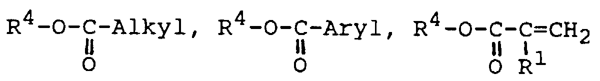 und
R4 = einen zweiwertigen, organischen, ggf. substituierten Rest, nämlich Alkylen, Arylen oder Alkarylen,
bedeuten,
(C) - 0,1 bis 2 Gew.-% eines Ferroceniumhexafluoroantimonates als Photoinitiator,
(D) - 0,01 bis 5 Gew.-% eines Beschleunigers,
(E) - sowie 0 bis 40 Gew.-% von Hilfsstoffen, Modifikatoren, (meth)acrylgruppenhaltigen Monomeren, (meth)acrylgruppenhaltigen Prepolymeren und/oder von unter Radikalbildung zerfallenden Verbindungen.

2. Epoxidharzmasse nach Anspruch 1, dadurch gekennzeichnet, daß die Komponente (A) ein Gemisch aus cycloaliphatischen Diepoxidverbindungen und aliphatischen Mono- oder Diglycidylverbindungen sowie cycloaliphatischen Silanen ist.

3. Epoxidharzmasse nach Anspruch 1, dadurch gekennzeichnet, daß die Komponente (A) ein Gemisch aus cycloaliphatischen Diepoxidverbindungen und aliphatischen Epoxysilanen ist, wobei das Massenverhältnis der Epoxysilane zu den cycloaliphatischen Diepoxidverbindungen 1:5 bis 1:100 beträgt.

4. Epoxidharzmasse nach Anspruch 3, dadurch gekennzeichnet, daß die Diepoxidverbindung das 3,4-Epoxycyclohexylmethyl-3',4'-epoxycyclohexylcarboxylat und das Epoxysilan das Epoxycyclohexylalkylentrimethoxysilan ist, wobei das Massenverhältnis zwischen Epoxysilan und Diepoxidverbindung 1:20 bis 1:80 beträgt.

5. Epoxidharzmasse nach Anspruch 1 oder 2, dadurch gekennzeichnet, daß die aliphatischen, Epoxidgruppen enthaltenden Verbindungen der Komponente (A) Mono- und Diglycidether von Polyetherdiolen sind.

6. Epoxidharzmasse nach einem der Ansprüche 1 bis 5, dadurch gekennzeichnet, daß die Komponente (B) aus gemischten Polyethern mit Molmassen zwischen 4500 und 20000 besteht.

7. Epoxidharzmasse nach Anspruch 6, dadurch gekennzeichnet, daß die Komponente (B) aus Copolyethern aus Ethylenoxid und Tetrahydrofuran sowie deren durch Umsetzung an den endständigen OH-Gruppen mit organischen Säuren modifizierten Derivaten besteht.

8. Epoxidharzmasse nach Anspruch 7, dadurch gekennzeichnet, daß das molare Verhältnis zwischen Ethylenoxid und Tetrahydrofuran 1:6 bis 1:2 beträgt.

9. Epoxidharzmasse nach einem der Ansprüche 1 bis 8, dadurch gekennzeichnet, daß mindestens eine Verbindung der Komponente (B) ganz oder teilweise methacryliert oder acryliert ist.

10. Epoxidharzmasse nach Anspruch 7, dadurch gekennzeichnet, daß die endständigen OH-Gruppen des Copolyethers ganz oder teilweise acetyliert sind.

11. Epoxidharzmasse nach einem der Ansprüche 1 bis 10, dadurch gekennzeichnet, daß in der Verbindung der allgemeinen Formel (I) der zweiwertige organische Rest R⁴ eine Alkylengruppe mit 4 bis 50 C-Atomen ist.

12. Epoxidharzmasse nach einem der Ansprüche 1 bis 11, dadurch gekennzeichnet, daß das Ferroceniumhexafluoroantimonat (Komponente C) (n⁵-2,4-Cyclopentadien-1-yl)-[(1,2,3,4,5,6,η)-(1-methylethyl)-benzol]-eisen(1+)hexafluoroantimonat(1-) ist.

13. Epoxidharzmasse nach einem der Ansprüche 1 bis 12, dadurch gekennzeichnet, daß der Beschleuniger (Komponente D) eine Peroxyverbindung ist.

14. Epoxidharzmasse nach Anspruch 13, dadurch gekennzeichnet, daß der Beschleuniger eine 70 bis 90 %-ige Lösung von Cumolhydroperoxid in Cumol ist.

15. Epoxidharzmasse nach einem der Ansprüche 1 bis 14, dadurch gekennzeichnet, daß das Massenverhältnis zwischen der Komponente (C) und der Komponente (D) 1:1 bis 1:6 beträgt.

16. Epoxidharzmasse nach einem der Ansprüche 1 bis 15, dadurch gekennzeichnet, daß sie als Komponente (E) 5 bis 25 Gew.-% Acrylgruppen-haltige oder Methacrylgruppen-haltige Monomere und/oder Prepolymere enthält, wobei diese Verbindungen jeweils mindestens 2 Acryl- und/oder Methacrylgruppen sowie mindestens eine Ethergruppierung im Molekül besitzen.

17. Verfahren zur Herstellung einer flexibilisierten Epoxidharzmasse gemäß einem der Ansprüche 1 bis 16, dadurch gekennzeichnet, daß man in einer ersten Stufe die Komponenten (A), (B), (D) und (E) in Gegenwart von Tageslicht und unter Luftzutritt miteinander vermischt und das Gemisch homogenisiert, in einer zweiten Stufe dem homogenisierten Gemisch unter Lichtausschluß die Komponente (C) in einem geeigneten Lösemittel zusetzt, die erhaltene Masse erneut homogenisiert und in lichtundurchlässige Behälter abfüllt.

18. Verfahren nach Anspruch 17, dadurch gekennzeichnet, daß in der ersten Stufe das Vermischen der Komponenten unter Einleitung von Luft erfolgt.

19. Verfahren nach Anspruch 17 oder 18, dadurch gekennzeichnet, daß als Lösemittel für die Komponente (C) Propylencarbonat verwendet wird.

20. Verwendung der flexibilisierten Epoxidharzmassen gemäß einem der Ansprüche 1 bis 16 zum Verkleben, Vergießen, Abdichten und Beschichten von Substraten.

## Claims

1. Flexibilised epoxy resin material having photoinitiated curing, which comprises
(A) from 20 to 95 wt-% of a mixture of cycloaliphatic and aliphatic compounds containing in each case at least one epoxy group,
(B) from 4.89 to 73 wt-% of at least one compound flexibilising the cured epoxy resin material, of the general formula I 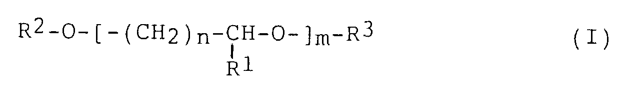 in which
m = an integer from 20 to 300,
n = an integer from 1 to 5,
R¹ = H or C₁-C₄-alkyl,
R² and R³ denote, independently of one another, H, alkyl, aryl, allyl, 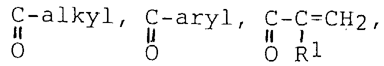 R⁴-OH, R⁴-O-alkyl, R⁴-O-aryl, R⁴-O-allyl, 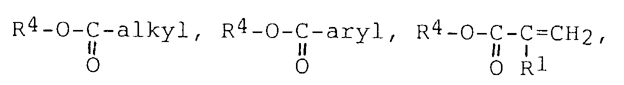 and
R4 denotes a divalent organic, optionally substituted radical, namely alkylene, arylene or alkarylene,
(C) from 0.1 to 2 wt-% of a ferrocenium hexafluoroantimonate as the photoinitiator,
(D) from 0.01 to 5 wt-% of an accelerator,
(E) and from 0 to 40 wt-% auxiliary substances, modifying agents, (meth)acrylic group-containing monomers, (meth)acrylic group-containing prepolymers and/or compounds which on decomposing form radicals.

2. Epoxy resin material according to Claim 1, characterised in that component (A) is a mixture of cycloaliphatic diepoxy compounds and aliphatic mono- or diglycidyl compounds and cycloaliphatic silanes.

3. Epoxy resin material according to Claim 1, characterised in that component (A) is a mixture of cycloaliphatic diepoxy compounds and aliphatic epoxy silanes, with the mass ratio of the epoxy silanes to the cycloaliphatic diepoxy compounds being from 1 : 5 to 1 : 100.

4. Epoxy resin material according to Claim 3, characterised in that the diepoxy compound is 3,4-epoxycyclohexylmethyl-3',4'-epoxycyclohexyl carboxylate and the epoxy silane is epoxycyclohexyl alkylene trimethoxysilane, with the mass ratio of epoxy silane to diepoxy compound being from 1 : 20 to 1 : 80.

5. Epoxy resin material according to Claim 1 or 2, characterised in that the aliphatic, epoxy group-containing compounds of component (A) are mono- and diglycidyl ethers of polyether diols.

6. Epoxy resin material according to one of Claims 1 to 5, characterised in that component (B) comprises mixed polyethers having molar masses between 4500 and 20000.

7. Epoxy resin material according to Claim 6, characterised in that component (B) comprises ethylene oxide/tetrahydrofuran copolyethers and derivatives thereof modified by reacting terminal OH groups thereof with organic acids.

8. Epoxy resin material according to Claim 7, characterised in that the molar ratio of ethylene oxide to tetrahydrofuran is from 1 : 6 to 1 : 2.

9. Epoxy resin material according to one of Claims 1 to 8, characterised in that at least one compound of component (B) is completely or partially methacrylated or acrylated.

10. Epoxy resin material according to Claim 7, characterised in that the terminal OH groups of the copolyether are completely or partially acetylated.

11. Epoxy resin material according to one of Claims 1 to 10, characterised in that the divalent organic radical R4 in the compound of the general formula (I) is an alkylene group having 4 to 50 C atoms.

12. Epoxy resin material according to one of Claims 1 to 11, characterised in that the ferrocenium hexafluoroantimonate (component C) is (η⁵-2,4-cyclopentadien-1-yl)-[(1,2,3,4,5,6,η)-(1-methylethyl) benzene] iron(1+)hexafluoroantimonate(1-).

13. Epoxy resin material according to one of Claims 1 to 12, characterised in that the accelerator (component D) is a peroxy compound.

14. Epoxy resin material according to Claim 13, characterised in that the accelerator is a from 70 to 90% solution of cumene hydroperoxide in cumene.

15. Epoxy resin material according to one of Claims 1 to 14, characterised in that the mass ratio of component (C) to component (D) is from 1 : 1 to 1 : 6.

16. Epoxy resin material according to one of Claims 1 to 15, characterised in that it contains as component (E) from 5 to 25 wt-% of acrylic group-containing or methacrylic group-containing monomers and/or prepolymers, with the said compounds having in each case at least 2 acrylic and/or methacrylic groups and at least one ether group in the molecule.

17. Process for the preparation of a flexibilised epoxy resin material according to one of Claims 1 to 16, characterised in that in a first stage the components (A), (B), (D) and (E) are mixed together in the presence of daylight and with the ingress of air, and the mixture is homogenised, and in a second stage component (C) in a suitable solvent is added to the homogenised mixture with the exclusion of light, and the material obtained is homogenised again and is filled into light-tight containers.

18. Process according to Claim 17, characterised in that in the first stage the components are mixed with the introduction of air.

19. Process according to Claim 17 or 18, characterised in that propylene carbonate is used as the solvent for component (C).

20. Use of the flexibilised epoxy resin materials according to one of Claims 1 to 16 for bonding, casting, sealing and substrate coating.

## Revendications

1. Masse de résine époxyde flexibilisée, durcissant par photo-amorçage, constituée
(A) de 20 à 95 % en poids d'un mélange de composés cycloaliphatiques et aliphatiques, contenant chacun au moins un groupe époxy,
(B) de 4,89 à 73 % en poids d'au moins un composé assurant la flexibilisation de la masse de résine époxyde durcie, de formule générale I 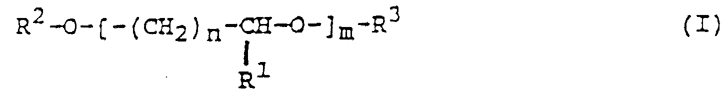 dans laquelle
m est un nombre entier de 20 à 300,
n est un nombre entier de 1 à 5,
R¹ est H ou un groupe alkyle en C₁ à C₄,
R² à R³, indépendamment l'un de l'autre, sont chacun H ou un groupe alkyle, aryle, allyle, 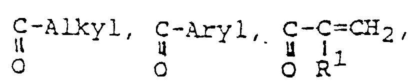 R⁴-OH, R⁴-O-Alkyl, R⁴-O-Aryl, R⁴-O-Allyl, 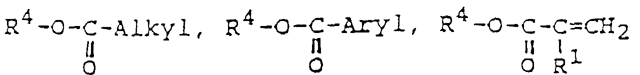
et R⁴ est un radical organique divalent éventuellement substitué, plus précisément alkylène, arylène ou alkarylène,
(C) de 0,1 à 2 % en poids d'un hexafluoroantimoniate de ferrocénium servant de photo-amorceur,
(D) de 0,01 à 5 % en poids d'un accélérateur,
(E) et de 0 à 40 % en poids d'adjuvants, modifiants, monomères contenant des groupes (méth)acryle, prépolymères contenant des groupes (méth)acryle et/ou composés qui se décomposent avec formation de radicaux.

2. Masse de résine époxyde selon la revendication 1, caractérisée en ce que le constituant (A) est un mélange de composés diépoxydiques cycloaliphatiques et de composés mono- ou diglycidyliques aliphatiques, ainsi que de silanes cycloaliphatiques.

3. Masse de résine époxyde selon la revendication 1, caractérisée en ce que le constituant (A) est un mélange de composés diépoxydiques cycloaliphatiques et d'époxysilanes aliphatiques, le rapport en masse des époxysilanes aux composés diépoxydiques cycloaliphatiques étant de 1:5 à 1:100.

4. Masse de résine époxyde selon la revendication 3, caractérisée en ce que le composé diépoxydique est le 3',4'-époxycyclohexylcarboxylate de 3,4-époxycyclohexylméthyle, et l'époxysilane est un époxycyclohexylalkylènetriméthoxysilane, le rapport en masse de l'époxysilane au composé diépoxydique étant de 1:20 à 1:80.

5. Masse de résine époxyde selon la revendication 1 ou 2, caractérisée en ce que les composés aliphatiques contenant des groupes époxy du constituant (A) sont les éthers mono- et diglycidyliques de polyétherdiols.

6. Masse de résine époxyde selon l'une des revendications 1 à 5, caractérisée en ce que le constituant (B) est constitué de polyéthers mixtes, ayant une masse moléculaire de 4500 à 20.000.

7. Masse de résine époxyde selon la revendication 6, caractérisée en ce que le constituant (B) est constitué de copolyéthers à base d'oxyde d'éthylène et de tétrahydrofuranne, ainsi que de leurs dérivés, modifiés par réaction, au niveau des groupes OH terminaux, avec des acides organiques.

8. Masse de résine époxyde selon la revendication 7, caractérisée en ce que le rapport en moles de l'oxyde d'éthylène au tétrahydrofuranne est de 1:6 à 1:2.

9. Masse de résine époxyde selon l'une des revendications 1 à 8, caractérisée en ce qu'au moins un composé du constituant (B) est en totalité ou en partie méthacrylé ou acrylé.

10. Masse de résine époxyde selon la revendication 7, caractérisée en ce que les groupes OH terminaux du copolyéther sont en totalité ou en partie acétylés.

11. Masse de résine époxyde selon l'une des revendications 1 à 10, caractérisée en ce que, dans le composé de formule générale (I), le radical organique divalent R⁴ est un groupe alkylène ayant de 4 à 50 atomes de carbone.

12. Masse de résine époxyde selon l'une des revendications 1 à 11, caractérisée en ce que l'hexafluoroantimoniate de ferrocénium (constituant C) est l'hexafluoroantimoniate(1-) de (η⁵-2,4-cyclopentadiéne-1-yle)-[(1,2,3,4,5,6,η)-(1-méthyléthyl)-benzène]-fer(1+).

13. Masse de résine époxyde selon l'une des revendications 1 à 12, caractérisée en ce que l'accélérateur (constituant D) est un composé peroxydé.

14. Masse de résine époxyde selon la revendication 13, caractérisée en ce que l'accélérateur est une solution à 70-90 % d'hydroperoxyde de cumène dans le cumène.

15. Masse de résine époxyde selon l'une des revendications 1 à 14, caractérisée en ce que le rapport en masse du constituant (C) au constituant (D) est de 1:1 à 1:6.

16. Masse de résine époxyde selon l'une des revendications 1 à 15, caractérisée en ce qu'elle contient, en tant que constituant (E) de 5 à 25 % en poids de monomères et/prépolymères contenant des groupes alkyle ou des groupes méthacryle, chacun de ces composés comportant au moins deux groupes acryle et/ou méthacryle, et au moins un groupement éther par molécule.

17. Procédé pour préparer une masse de résine époxyde flexibilisée selon l'une des revendications 1 à 16, caractérisé en ce que, dans une première étape, on mélange les uns aux autres les constituants (A), (B), (D) et (E), en présence de la lumière du jour et avec apport d'air, et on homogénéise le mélange, puis, dans une deuxième étape, on ajoute au mélange homogénéisé, à l'abri de la lumière, le constituant (C) dans un solvant approprié, on homogénéise de nouveau la masse obtenue, et on la transvase dans des récipients opaques à la lumière.

18. Procédé selon la revendication 17, caractérisé en ce que le mélange des constituants, avec introduction d'air, a lieu dans la première étape.

19. Procédé selon la revendication 17 ou 18, caractérisé en ce qu'on utilise du carbonate de propylène en tant que solvant pour le constituant (C).

20. Utilisation des masses de résine époxyde flexibilisées selon l'une des revendications 1 à 16, pour coller, sceller, étanchéifier et revêtir des substrats.
